# EUROPEAN PATENT APPLICATION

(11) **EP 4 844 852 A1**
(43) Date of publication of application: **25.11.2026**
(21) Application number: 26179941.5
(22) Date of filing: 20.05.2026
(51) Int. Cl.: H01M 10/04, H01M 10/0587, H01M 50/124, H01M 50/202, H01M 50/342, H01M 50/383, H01M 50/477, H01M 50/531, H01M 50/474, H01M 50/528

(54) **SECONDARY BATTERY INCLUDING INSULATING COVER CONTAINING A FIRE EXTINGUISHING AGENT**

(30) Priority: 22.05.2025 KR 20250066553
(71) Applicant: SAMSUNG SDI CO., LTD., Yongin-si, Gyeonggi-do 17084 (KR)
(72) Inventor: YOO, Seungyeol, 17084 Gyeonggi-do (KR); KIM, Backgun, 17084 Gyeonggi-do (KR)
(74) Representative: Bardehle Pagenberg Partnerschaft mbB Patentanwälte Rechtsanwälte

(57) **Abstract**

A secondary battery includes an electrode assembly including a first electrode, a second electrode, and a separator interposed between the first electrode and the second electrode, a case accommodating the electrode assembly therein, and an insulating cover disposed in at least a part of a space formed between the electrode assembly and the case, and the insulating cover includes a plurality of sealed air pockets, and at least one of the plurality of air pockets may contain a fire extinguishing agent.

## Description

### CROSS-REFERENCE TO RELATED APPLICATION

The present application claims priority to Korean Patent Application No. 10-2025-0066553, filed on 22 May 2025, in the Korean Intellectual Property Office, the entire disclosure of which is incorporated herein by reference.

### FIELD

The present disclosure relates to a secondary battery and more particularly to a secondary battery including an insulating cover containing a fire extinguishing agent that exhibits improved safety.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Recently, various studies have been attempted to increase the electric capacity and energy density of secondary batteries. However, as the energy density of secondary batteries increases, safety issues such as ignition, explosion, and fire occurrence are emerging.

The herein information disclosed in this Background section is for enhancement of understanding of the background of the present disclosure, and therefore, it may contain information that does not constitute related (or prior) art.

### SUMMARY

A secondary battery according to embodiments of the present disclosure includes an electrode assembly including a first electrode, a second electrode, and a separator interposed between the first electrode and the second electrode, a case accommodating the electrode assembly therein, and an insulating cover disposed in at least a part of a space formed between the electrode assembly and the case, and the insulating cover includes a plurality of sealed air pockets, and at least one of the plurality of air pockets may contain a fire extinguishing agent.

A secondary battery according to embodiments of the present disclosure includes an electrode assembly including a first electrode, a second electrode, and a separator interposed between the first electrode and the second electrode, a case accommodating the electrode assembly therein, and an insulating cover disposed in at least a part of a space formed between the electrode assembly and the case, and the insulating cover includes a plurality of sealed air pockets, at least one of the plurality of air pockets contains a fire extinguishing agent, at least one air pocket containing the fire extinguishing agent among the plurality of air pockets is configured to be ruptured at a critical temperature or a critical pressure, the plurality of air pockets is sealed within a thickness direction of the insulating cover, the plurality of air pockets protrudes in a direction toward the case, and the plurality of air pockets may be disposed to be spaced apart from one another.

However, aspects and features of the present disclosure are not limited to those described herein, and other aspects and features not mentioned will be clearly understood by a person skilled in the art from the detailed description, described herein.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an example of a secondary battery according to embodiments of the present disclosure.
FIG. 2 is a cross-sectional view illustrating an example of a secondary battery according to embodiments of the present disclosure.
FIG. 3 is a cross-sectional view illustrating an example of a secondary battery according to embodiments of the present disclosure.
FIG. 4 illustrates an example of each of a plurality of air pockets according to some embodiments of the present disclosure.
FIG. 5 is a cross-sectional view illustrating an example of an insulating cover according to embodiments of the present disclosure.
FIG. 6 is a cross-sectional view illustrating an example of an insulating cover according to embodiments of the present disclosure.
FIG. 7 is a cross-sectional view illustrating an example of an insulating cover according to embodiments of the present disclosure.
FIG. 8 is a cross-sectional view illustrating an example of an insulating cover according to embodiments of the present disclosure.
FIG. 9 is a cross-sectional view illustrating an example of an insulating cover according to embodiments of the present disclosure.
FIG. 10 illustrates an example of a hole of an insulating cover according to embodiments of the present disclosure.
FIG. 11 is a front view illustrating an example of a secondary battery according to embodiments of the present disclosure.
FIG. 12 is a perspective view illustrating an example of an insulating cover according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above" "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to one another, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used in this specification is for describing embodiments of the present disclosure and is not intended to limit the present disclosure.

In the present disclosure, dimensions and relative dimensions of layers and regions illustrated in the drawings may be exaggerated for clarity of description. That is, dimensions illustrated in the drawings are only for convenience of understanding and are not limited thereto. In addition, throughout the specification, the same reference numerals may refer to the same components.

A task to be solved by the present disclosure is to provide a secondary battery for solving the problems as described herein.

According to some embodiments of the present disclosure, the secondary battery includes the insulating cover disposed in at least a part of the space formed between the electrode assembly and the case, and the insulating cover may include the plurality of air pockets. According to this configuration, a position of the electrode assembly disposed inside the case is maintained substantially constant, and a gap between the electrode assembly and other components inside the case can be maintained substantially constant. In addition, an impact received by the electrode assembly from outside the case can be mitigated.

According to some embodiments of the present disclosure, because at least one of the plurality of air pockets of the insulating cover contains the fire extinguishing agent, a fire due to occurrence of an event such as occurrence of an internal short circuit, heat generation due to overcurrent, ignition, or thermal runaway can be suppressed or blocked.

These and other aspects and features of the present disclosure will be described in or will be apparent from the following description of embodiments of the present disclosure.

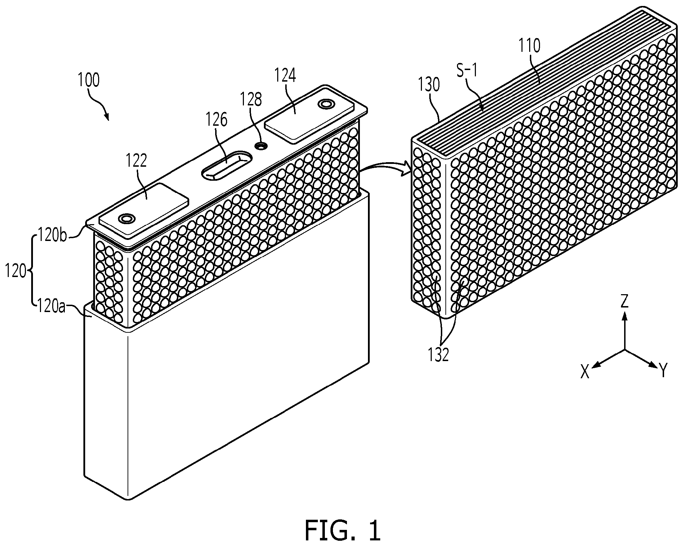

FIG. 1 illustrates an example of a secondary battery according to embodiments of the present disclosure. FIG. 1 is a perspective view showing a state in which an electrode assembly 110 and an insulating cover 130 are exposed to the outside before assembly of a secondary battery 100 is completed, in order to show an internal configuration of the secondary battery 100. A secondary battery according to embodiments may be a prismatic battery or a cylindrical battery. Hereinafter, a case where the secondary battery is a prismatic battery will be described as an example, but the shape of the secondary battery is not particularly limited in the present disclosure.

Referring to FIG. 1, a secondary battery 100 according to embodiments may include an electrode assembly 110, a case 120 accommodating the electrode assembly 110 therein, and an insulating cover 130 disposed in at least a part of a space formed between the electrode assembly 110 and the case 120. Here, the insulating cover 130 may include a plurality of sealed air pockets 132. Additionally, at least one of the plurality of air pockets 132 may contain a fire extinguishing agent.

The electrode assembly 110 may include a first electrode, a second electrode, and a separator interposed between the first electrode and the second electrode.

The electrode assembly 110 may be formed by winding or stacking one or more laminates including the first electrode, the separator, and the second electrode in a thin plate or film form. In an example, when the electrode assembly 110 is a wound laminate, a winding axis may be parallel to a longitudinal direction of the case 120 (e.g., the X direction in FIG. 1). In another example, the electrode assembly 110 may be a stack type rather than a winding type. In another example, the electrode assembly 110 may be a Z-stack electrode assembly in which a positive electrode plate and a negative electrode plate are inserted into both sides of a separator bent in a Z-stack. However, the shape of the electrode assembly 110 in the present disclosure is not limited to those described herein, and may be implemented in other shapes. In addition, the electrode assembly 110 may be accommodated inside the case 120 by stacking one or more electrode assemblies such that long side surfaces are adjacent to one another, and the number of the electrode assemblies 110 is not limited in the present disclosure.

The first electrode of the electrode assembly 110 may serve as a negative electrode, and the second electrode may serve as a positive electrode. Conversely, the first electrode of the electrode assembly 110 may serve as a positive electrode, and the second electrode may serve as a negative electrode.

The first electrode is formed by coating a first electrode active material, such as graphite or carbon, on a first electrode substrate made of a metal foil like copper, copper alloy, nickel, or nickel alloy, and may include a first electrode tab (or a first uncoated portion), which is a region where the first electrode active material is not coated. The first electrode tab can serve as a path for current flow between the first electrode and an external conductor (e.g., a first current collector) or a device. In some examples, the first electrode tab may be formed by cutting to initially protrude to one side during the manufacturing of the first electrode. Alternatively, it may protrude further to one side than the separator without requiring additional cutting.

The second electrode is formed by coating a second electrode active material such as a transition metal oxide on a second electrode substrate formed of a metal foil such as aluminum or an aluminum alloy, and may include a second electrode tab (or a second uncoated portion) which is a region where the second electrode active material is not coated. The second electrode tab may be a path for current flow between the second electrode and an external conductor (e.g., a second current collector) or a device. In some examples, the second electrode tab may be formed by cutting to protrude to the other side in advance when manufacturing the second electrode, or may protrude further to the other side than the separator without separate cutting.

In some examples, the first electrode tab may be located on a left end side surface of the electrode assembly, and the second electrode tab may be located on a right end side surface of the electrode assembly, or may be located on one surface in the same direction as in FIG. 1. Here, left and right are for convenience of description based on the secondary battery 100, and the positions may be changed when the secondary battery is rotated horizontally or vertically.

The first electrode tab of the first electrode and the second electrode tab of the second electrode may be located at both side ends of the electrode assembly 110, respectively. In some examples, the electrode assembly 110 may be accommodated in the case 120 together with an electrolyte. In addition, the electrode assembly 110 may have the first current collector and the second current collector welded and connected respectively to the first electrode tab of the first electrode and the second electrode tab of the second electrode, which are exposed on both sides.

The separator functions to prevent a short circuit between the first electrode and the second electrode while allowing movement of lithium ions. The separator may be composed of, for example, a polyethylene film, a polypropylene film, a polyethylenepolypropylene film, or the like.

When the secondary battery 100 is a lithium secondary battery, the electrolyte may include a non-aqueous organic solvent and a lithium salt. The non-aqueous organic solvent serves as a medium through which ions involved in electrochemical reactions of the battery can move. The non-aqueous organic solvent may be a carbonate-based, ester-based, ether-based, ketone-based, or alcohol-based solvent, an aprotic solvent, or a combination thereof, and may be used alone or in a mixture of two or more. When using a carbonate-based solvent, a mixture of a cyclic carbonate and a chain carbonate may be used. However, the type of electrolyte is not particularly limited in the present disclosure.

In embodiments, the case 120 accommodating the electrode assembly 110 therein may include a can 120a having an opening at one end large enough to insert the electrode assembly, and a cap plate 120b capable of sealing the opening. The case 120 may be assembled by coupling the cap plate 120b to the opening of the can 120a. The case 120 may be composed of a metal or polymer material that can protect the electrode assembly 110 and the electrolyte from the external environment and secure mechanical strength and sealing performance. For example, a metal such as aluminum, iron, stainless steel, or a polymer resin (e.g., polypropylene, polyamide, etc.) may be used as a material for the case 120.

In embodiments, the cap plate 120b may include a through-hole where a vent part 126 designed to open when the internal pressure of the secondary battery exceeds a certain level is disposed, an electrolyte injection port 128 configured to inject an electrolyte therein, and a through-hole where an electrode terminal for electrical connection with the electrode assembly 110 is disposed. Each through-hole may be sealed by the vent part 126, which may have a notch or the like formed therein, a plug sealing the electrolyte injection port, and an electrode terminal.

The electrode terminal may include a first electrode terminal 122 electrically connected to the first electrode of the electrode assembly 110 and a second electrode terminal 124 electrically connected to the second electrode of the electrode assembly 110. For example, the electrode terminal may pass through a through-hole on the cap plate 120b to seal the through-hole.

Referring to FIG. 1, the insulating cover 130 including the plurality of sealed air pockets 132 may be disposed between the electrode assembly 110 and the case 120. The insulating cover 130 may be disposed in at least a part of a space formed between the electrode assembly 110 and the case 120. The insulating cover 130 may be a pocket type that contains the electrode assembly 110 therein and has one side open. For example, as shown in FIG. 1, an open side of the insulating cover 130 may be a surface facing the electrode terminal.

The secondary battery 100 further includes an electrode terminal exposed to an outside of the case 120, and the electrode assembly 110 accommodated inside the case 120 may further include an electrode tab connected to the electrode terminal. The electrode tab may extend from the first electrode or the second electrode of the electrode assembly 110. At this time, the insulating cover 130 according to embodiments may cover at least some of the side surfaces of the electrode assembly 110 excluding the side surface on which the electrode tab is disposed.

For example, as shown in FIG. 1, the insulating cover 130 may cover surfaces of the electrode assembly 110 excluding a side surface S-1 on which the electrode tab is disposed. Accordingly, interference with components of the cap plate 120b adjacent to the side surface S-1 on which the electrode tab is disposed may not occur. For example, the insulating cover 130 may cover five surfaces of the electrode assembly 110 excluding the side surface S-1 on which the electrode tab is disposed. The side surface S-1 on which the electrode tab of the electrode assembly 110 is disposed may refer to a surface facing the electrode terminal among several surfaces distinguished based on angular edges of the electrode assembly 110.

The electrode tab may include a first electrode tab extending from the first electrode and a second electrode tab extending from the second electrode. The electrode tab may mediate an electrical connection between the electrode and the electrode terminal. The first electrode tab and the second electrode tab may extend from an uncoated portion of the first electrode and an uncoated portion of the second electrode, respectively, or may be coupled to the uncoated portion by welding or the like.

The material of the insulating cover 130 may be a material having electrical insulation. For example, the insulating cover 130 may be composed of a polymer film such as polyethylene, polyimide, polyester, polypropylene, or the like. The insulating cover 130 can prevent occurrence of a short circuit by insulating the electrode assembly 110 from the metal case 120. An outer shell of each of the plurality of air pockets 132 may be composed of an electrically insulating material.

At least one of the plurality of air pockets 132 contains a fire extinguishing agent, and an air pocket containing the fire extinguishing agent may be configured to be ruptured at a critical temperature or a critical pressure. For example, a material and thickness of the air pocket may be set such that the air pocket can be ruptured at the critical temperature or the critical pressure. The internal pressure may be increased by an event, such as a swelling phenomenon of the electrode assembly 110. The air pocket is designed to be ruptured when the critical temperature or critical pressure inside the case 120, which is determined according to safety evaluation standards of a secondary battery, is exceeded, thereby releasing the contained fire extinguishing agent. That is, a rupture operation variable of each of the plurality of air pockets 132 can be set to temperature or pressure. With this configuration, when the critical temperature or the critical pressure is exceeded, the fire extinguishing agent is released from at least one of the plurality of air pockets 132 to suppress or block a fire due to occurrence of an event such as ignition or thermal runaway.

A number of air pockets 132 sufficient to roughly fill each unit cover (e.g., a cover parallel to each of the XY plane, YZ plane, and XZ plane in FIG. 1) of the insulating cover 130 may be disposed on each plane of the insulating cover 130 while being spaced apart from or adjacent to one another. However, the number of the plurality of air pockets 132 is not particularly limited in the present disclosure.

In embodiments, the fire extinguishing agent contained in at least one of the plurality of air pockets 132 may include a non-flammable gas. In this case, energy density per weight of the secondary battery 100 may be improved compared to a case where a liquid or solid fire extinguishing agent is included in the air pocket 132. However, any of solid (e.g., powder form), liquid, and gas fire extinguishing agents may be adopted as the fire extinguishing agent contained in the air pocket. For example, the fire extinguishing agent may include a carbon dioxide fire extinguishing agent, a halon fire extinguishing agent, a halogen compound (e.g., SF6), a gas-phase fire extinguishing agent of an inert gas, or a combination thereof, depending on the use of the secondary battery. Alternatively, the fire extinguishing agent may include a phosphate fire extinguishing agent, a powder-phase fire extinguishing agent of a bicarbonate fire extinguishing agent, or a combination thereof. Or the fire extinguishing agent may include an acid-alkali fire extinguishing agent, a reinforced liquid fire extinguishing agent, a liquid-phase fire extinguishing agent of a foam fire extinguishing agent, or a combination thereof.

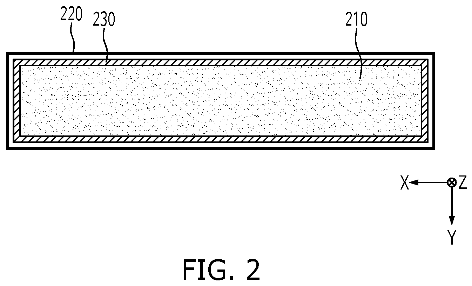

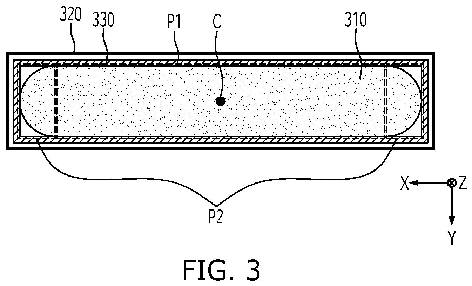

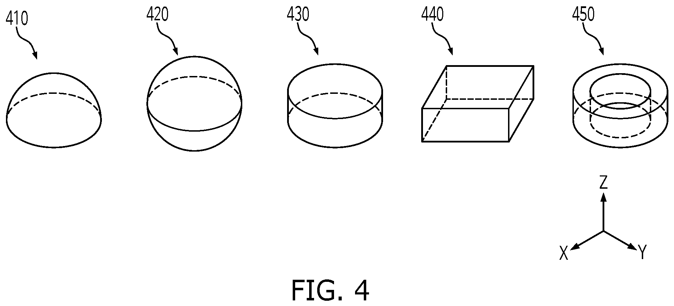

FIG. 2 and FIG. 3 are cross-sectional views illustrating examples of secondary batteries according to some embodiments of the present disclosure. FIG. 2 and FIG. 3 may correspond to cross-sectional views of the secondary battery shown in FIG. 1 cut along the XY plane. FIG. 2 and FIG. 3 are simplified cross-sectional views omitting illustration of the plurality of air pockets. Shapes and features of the plurality of air pockets will be described later with reference to FIGS. 4 to 9.

Referring to FIG. 2 and FIG. 3, insulating covers 230 and 330 according to embodiments may be spaced apart from inner surfaces of cases 220 and 320. With such a configuration, it may be easy to insert electrode assemblies 210 and 310 covered with the insulating covers 230 and 330 into the opening of a can (e.g., the can 120a in FIG. 1). A plurality of air pockets according to embodiments may protrude toward the cases 220 and 320 in a thickness direction of the insulating covers 230 and 330. In this case, since the insulating covers 230 and 330 are spaced apart from the inner surfaces of the cases 220 and 320 by a predetermined interval, it is possible to prevent the air pockets from being ruptured by other factors such as a simple impact from outside the cases 220 and 320 other than events such as occurrence of an internal short circuit or heat generation due to overcurrent.

Referring to FIG. 2, the insulating cover 230 may be in close contact with the electrode assembly 210. Through this, the electrode assembly 210 can be insulated and protected from the metallic case 220. In addition, the insulating cover 230 including the plurality of air pockets maintains the position of the electrode assembly 210 inside the case 220 and can mitigate an impact while maintaining a gap between the electrode assembly 210 and other components inside the case 220.

Referring to FIG. 3, an electrode assembly 310 may have a shape in which a first electrode, a second electrode, and a separator interposed between the first electrode and the second electrode are wound around a winding axis C. In this shape, the electrode assembly 310 may include curved portions P2 formed at both ends of the electrode assembly 310 as portions where the first electrode, the second electrode, and the separator are bent, and a flat portion P1 located between two curved portions P2 as a portion where the first electrode, the second electrode, and the separator are flatly stacked. An insulating cover 330 according to embodiments may be disposed to contact an outermost region of the curved portion P2 of the wound shape of the electrode assembly 310 and the flat portion P1 of the wound shape of the electrode assembly 310. Accordingly, the position of the electrode assembly 310 can be maintained while being surrounded by the insulating cover 330. In addition, the impact applied to the electrode assembly 310 can be mitigated through the plurality of air pockets of the insulating cover 330, while maintaining the spacing between the electrode assembly 310 and other components inside the case 320.

FIG. 4 illustrates an example of each of a plurality of air pockets according to some embodiments of the present disclosure.

A shape of each of the plurality of air pockets according to embodiments may be any one of a circular shape, a hemispherical shape, a cylindrical shape, a polygonal prism shape, and a tube shape.

A hemispherical air pocket 410 may have a dome shape protruding convexly from one surface of the insulating cover (e.g., in FIG. 1, a cross-section of a long side surface of the insulating cover 130 cut along the XZ plane, or a long side surface parallel to the XZ plane of the insulating cover 130). In addition, a fire extinguishing agent may be filled inside the hemispherical structure of the air pocket 410. The hemispherical air pocket 410 has excellent durability against external impacts or pressures and has a high impact dispersion effect, and thus can provide a structure advantageous for absorption of external impacts and vibration mitigation for the electrode assembly. In addition, the hemispherical air pocket 410 has less interference with adjacent air pockets, so that dense arrangement may be possible.

A spherical air pocket 420 has a roughly spherical outer shape in a three-dimensional space and may have a structure that seals contents including a fire suppressant agent enclosed therein at a constant pressure. When the spherical air pocket 420 is implemented to have substantially the same radius of curvature in all directions, pressure or impact from the outside can be evenly distributed without being concentrated in a specific direction of the spherical air pocket 420. Accordingly, a load applied to the electrode assembly is not limited to a specific direction and is gently absorbed through the air pocket 420, providing effective cushioning and vibration reduction functions. The spherical air pocket 420 can stably protect the electrode assembly without long-term deformation or damage even under repeated load action by minimizing structural stress concentration. In addition, since the spherical air pocket 420 has a structure capable of curved contact, it can flexibly correspond to various shapes of electrode assemblies.

A cylindrical air pocket 430 has a cylindrical shape extending in an up-down direction (e.g., +Y direction, -Y direction) and may contain a fire extinguishing agent therein. Since the cylindrical air pocket 430 has high resistance to vertical loads, it can improve a protection effect against directional loads received by the electrode assembly inside the case. In addition, the cylindrical air pocket 430 has high volume efficiency relative to area while maintaining a constant height.

A polygonal prism air pocket 440 (e.g., a rectangular prism air pocket) has a column shape with a cross-section of a polygon such as a rectangle or a hexagon, and a fire extinguishing agent may be contained therein. Since each side and edge of the polygonal prism air pocket 440 are flatly arranged, close arrangement or alignment is easy without interference with adjacent air pockets, and a plurality of air pockets can be efficiently disposed within the same area. In addition, the polygonal prism air pocket 440 may be difficult to undergo local deformation in a specific direction when impact or pressure acts from the outside. Accordingly, overall structural stability of the insulating cover is improved, and a constant support force can be maintained in both horizontal and vertical directions against external loads. Therefore, the polygonal prism air pocket 440 can be uniformly in close contact with electrode assemblies of various shapes, for example, an electrode assembly having a structure with protruding corners or planes, according to the shape of the structure without deformation.

The tube-shaped air pocket 450 has a tubular structure extending along a certain length direction, and a fire extinguishing agent is sealed therein. The tube-shaped air pocket 450 can provide repetitive and uniform cushioning performance in one direction (e.g., the Y direction). When the tube-shaped air pocket 450 is disposed at a site where a local load may be concentrated, such as a side surface or a corner of the electrode assembly, the load is distributed over the entire tube structure of the air pocket 450, effectively preventing deformation or damage to the electrode assembly.

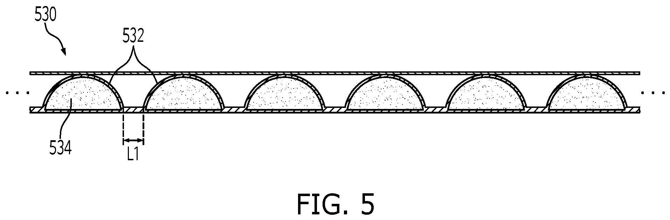

FIG. 5 to FIG. 7 are cross-sectional views illustrating examples of insulating covers according to some embodiments of the present disclosure. FIG. 5 to FIG. 7 are cross-sectional views when each of the plurality of air pockets is hemispherical.

Referring to FIG. 5, a plurality of air pockets 532 according to embodiments may be sealed within a thickness direction of an insulating cover 530. Each of the plurality of air pockets 532 may independently contain a fire extinguishing agent 534. A plurality of air pockets 532 according to embodiments may protrude toward a case (e.g., the case 220 in FIG. 2) in the thickness direction of the insulating cover 530. For example, the plurality of air pockets 532 may protrude in a direction toward the inner surface of the case (e.g., 220 in FIG. 2) while being disposed inside the thickness range of the insulating cover 530.

Referring to FIG. 5, in embodiments, a longest protruding region (one point at the outermost side in the case of a hemispherical shape) of the air pocket 532 may be located at one end within the thickness range of the insulating cover 530. Specifically, the longest protruding region of the air pocket 532 may be connected to one outer surface of the insulating cover 530. Accordingly, when the longest protruding region of the air pocket 532 is ruptured, the outermost side of the thickness range of the insulating cover 530 can be cut and opened. With such a configuration, the plurality of air pockets 532 inserted inside the thickness range of the insulating cover 530 when an event occurs can be easily ruptured under a critical temperature or a critical pressure. Accordingly, the fire extinguishing agent 534 contained in each of the plurality of air pockets 532 can be released when an event occurs.

Although not shown in FIG. 5 to FIG. 7, even when each of the plurality of air pockets is any one of spherical, cylindrical, polygonal prism, and tube shapes as described herein in FIG. 4, the plurality of air pockets may be sealed within the thickness direction of the insulating cover 530. In addition, the longest protruding region of the air pocket may be located at one end within the thickness range of the insulating cover 530. Specifically, the longest protruding region of the air pocket is connected to one outer surface of the insulating cover 530, and when the longest protruding region of the air pocket is ruptured, the outermost side of the thickness range of the insulating cover 530 can be cut and opened. The longest protruding region of each of the plurality of air pockets may be one point at the outermost side when the air pocket is spherical, a circular upper or lower surface when the air pocket is cylindrical, a polygonal upper or lower surface when the air pocket is polygonal prism, and one circular circumference on a plane when the air pocket is tube-shaped.

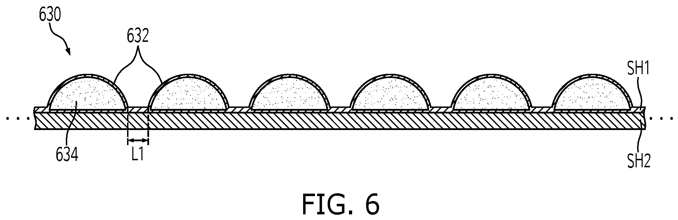

Referring to FIG. 6, a plurality of air pockets 632 according to embodiments is exposed on one side surface of an insulating cover 630 and may protrude in a direction toward a case (e.g., the case 220 in FIG. 2). Each of the plurality of air pockets 632 may independently contain a fire extinguishing agent 534.

An insulating cover 630 according to embodiments may include a first sheet SH1 and a second sheet SH2. The first sheet SH1 and the second sheet SH2 may be combined to form the plurality of air pockets 632. The first sheet SH1 and the second sheet SH2 may be composed of an insulating material such as polyethylene.

By processing the first sheet SH1 through a thermoforming or extrusion molding process using a mold, a plurality of recessed structures can be formed on one surface of the first sheet SH1. At this time, the mold includes a plurality of unevennesses having a shape corresponding to the shape of each of the plurality of air pockets 632 according to embodiments, and can be configured to uniformly form an air pocket shape of a predetermined shape (e.g., hemispherical, spherical, cylindrical, etc.) on the first sheet SH1. Thereafter, a predetermined amount of fire extinguishing agent can be independently enclosed inside each air pocket shape by injecting the fire extinguishing agent 634 into each recessed space.

Thereafter, the plurality of air pockets formed on the first sheet SH1 can be covered with the second sheet SH2 from the top and sealed by thermal fusion or an adhesive method. Accordingly, each of the plurality of air pockets 632 is individually sealed by the first sheet SH1 and the second sheet SH2, and can have an independent sealed structure that does not communicate between the plurality of air pockets 632. By such a configuration, even if a specific air pocket is ruptured, it does not affect adjacent air pockets, so that a local fire extinguishing effect can be exerted in stages, and as a result, fire spread around the electrode assembly can be suppressed and safety can be improved.

When an event such as occurrence of an internal short circuit or heat generation due to overcurrent occurs, as the electrode assembly swells, an air pocket at a corresponding site among the plurality of air pockets 632 protruding in the direction toward the case can be easily ruptured, and the fire extinguishing agent 634 contained therein can be released.

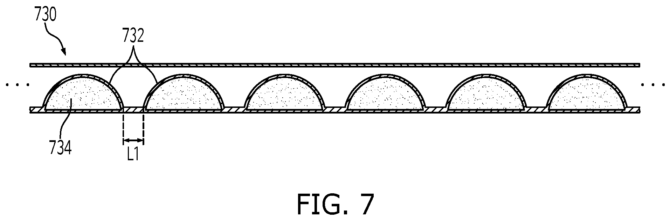

Referring to FIG. 7, a plurality of air pockets 732 according to embodiments is sealed within a thickness direction of an insulating cover 730 as described herein with reference to FIG. 5, but unlike in FIG. 5, a longest protruding region of the air pocket 732 may be located in the middle within the thickness range of the insulating cover 730. The middle within the thickness range of the insulating cover 730 may refer to a position biased toward one end relative to the exact center within the thickness range of the insulating cover 730. Accordingly, by maintaining a gap between the insulating cover 730 and the air pocket 732, it is possible to prevent the air pocket 732 from being easily ruptured by contacting and/or pressing against the inner surface of the case when an external impact occurs on the insulating cover 730, thereby preventing the fire extinguishing agent from being exhausted in advance.

Referring to FIG. 5 to FIG. 7, the plurality of air pockets 532, 632, and 732 may be disposed to be spaced apart from one another on the plane of the insulating covers 530, 630, and 730. For example, a gap L1 between the plurality of air pockets may be shorter than a maximum length of each of the plurality of air pockets 532, 632, and 732 (e.g., a radius of a hemispherical air pocket in FIGS. 5 to 7). In the insulating covers 530, 630, and 730, the gap L1 between the plurality of air pockets may not necessarily be constant.

As another example, the plurality of air pockets 532, 632, and 732 may be disposed adjacent to one another. That is, the gap L1 between the plurality of air pockets may be 0. However, even in this case, the plurality of air pockets 532, 632, and 732 may not communicate with one another. Accordingly, the fire extinguishing agent 534, 634, and 734 can be independently sealed in each of the plurality of air pockets 532, 632, and 732.

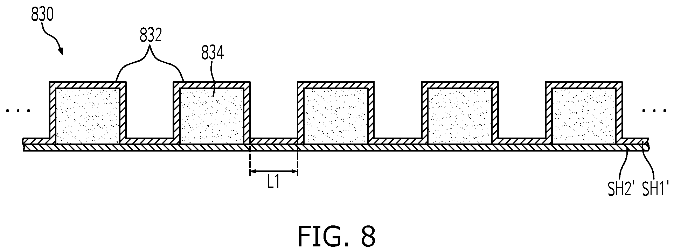

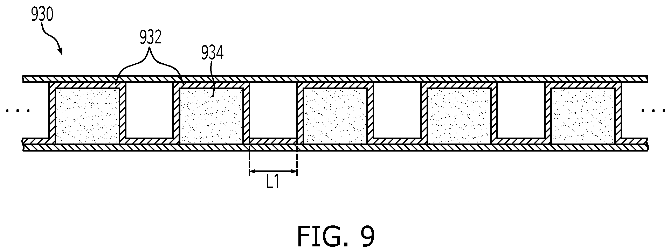

FIG. 8 and FIG. 9 are cross-sectional views illustrating examples of insulating covers according to some embodiments of the present disclosure. FIG. 8 and FIG. 9 are cross-sectional views when each of the plurality of air pockets is a rectangular prism.

Referring to FIG. 8, a plurality of air pockets 832 according to embodiments is exposed on one side surface of an insulating cover 830 and may protrude in a direction toward a case (e.g., the case 220 in FIG. 2). Each of the plurality of air pockets 832 may independently contain a fire extinguishing agent 834.

An insulating cover 830 according to embodiments may include a first sheet SH1' and a second sheet SH2'. The first sheet SH1' and the second sheet SH2' may be combined to form the plurality of air pockets 832 in a hexahedral shape. The first sheet SH1' and the second sheet SH2' may be composed of an insulating material such as polyethylene.

By processing the first sheet SH1' through a thermoforming or extrusion molding process using a mold, a plurality of recessed structures of a hexahedral shape can be formed on one surface of the first sheet SH1'. The mold includes a plurality of unevennesses having a shape corresponding to the shape of each of the plurality of air pockets 832 according to embodiments, and for example, can be configured to uniformly form a rectangular prism air pocket shape on the first sheet SH1'. Thereafter, a predetermined amount of fire extinguishing agent can be independently enclosed inside each air pocket shape by injecting the fire extinguishing agent 834 into each recessed space.

Thereafter, the openings of the plurality of air pocket shapes formed on the first sheet SH1' can be covered with the second sheet SH2' from the top, and peripheral parts of the air pockets can be sealed by thermal fusion or an adhesive method. Accordingly, each of the plurality of air pockets 832 is individually sealed by the first sheet SH1' and the second sheet SH2', and can have an independent sealed structure that does not communicate between the plurality of air pockets 832. By such a configuration, even if a specific air pocket is ruptured, it does not affect adjacent air pockets, so that a local fire extinguishing effect can be exerted step by step, and as a result, fire spread around the electrode assembly can be suppressed and safety can be improved.

When the electrode assembly swells due to an event such as the occurrence of an internal short circuit or heat generation due to overcurrent, an air pocket at a swollen site among the plurality of air pockets 832, which protrude in the direction toward the case, can be easily ruptured, and the fire extinguishing agent 834 contained therein can be released.

Referring to FIG. 9, a plurality of air pockets 932 according to embodiments may be sealed within a thickness direction of an insulating cover 930. Each of the plurality of air pockets 932 may independently contain a fire extinguishing agent 934. A plurality of air pockets 932 according to embodiments may protrude in a direction toward a case (e.g., the case 220 in FIG. 2). For example, the plurality of hexahedral air pockets 932 may protrude in a direction toward the inner surface of the case (e.g., 220 in FIG. 2) while being inserted inside the thickness range of the insulating cover 930.

Referring to FIG. 9, in embodiments, a rectangular longest protruding region corresponding to an upper or lower surface of the rectangular prism of the air pocket 932 may be located at one end within the thickness range of the insulating cover 930. As an example, the rectangular longest protruding region of the air pocket 932 may be connected to one outer surface of the insulating cover 930. Accordingly, when the longest protruding region of the air pocket 932 is ruptured, the outermost part of the thickness range of the insulating cover 930 can be cut and opened. With such a configuration, the plurality of air pockets 932 inserted inside the thickness range of the insulating cover 930 when an event occurs can be easily ruptured under a designed critical temperature or a critical pressure. Accordingly, the fire extinguishing agent 534 contained in each of the plurality of air pockets 932 can be released when an event occurs.

Referring to FIG. 8 and FIG. 9, in embodiments, the plurality of air pockets 832 and 932 may be disposed to be spaced apart from one another on the plane of the insulating covers 830 and 930. For example, a gap L1 between the plurality of air pockets may be shorter than a maximum length of each of the plurality of air pockets 832 and 932 (e.g., a diagonal length of a bottom surface of a hexahedral air pocket in FIGS. 8 and 9). In the insulating covers 830 and 930, the gap L1 between the plurality of air pockets may not necessarily be constant.

As another example, the plurality of air pockets 832 and 932 may touch one another. That is, the gap L1 between the plurality of air pockets may be 0. However, the plurality of air pockets 832 and 932 may not communicate with one another. Accordingly, the fire extinguishing agent 834 and 934 can be independently sealed in each of the plurality of air pockets 832 and 932.

A secondary battery according to embodiments may include an electrode assembly including a first electrode, a second electrode, and a separator interposed between the first electrode and the second electrode, a case accommodating the electrode assembly therein, and an insulating cover disposed in at least a part of a space formed between the electrode assembly and the case. At this time, the insulating cover includes a plurality of sealed air pockets, at least one of the plurality of air pockets contains a fire extinguishing agent, and at least one air pocket containing the fire extinguishing agent among the plurality of air pockets may be configured to be ruptured at a pre-designed critical temperature or critical pressure. In addition, the plurality of air pockets is sealed within the thickness direction of the insulating cover, the plurality of air pockets protrudes in a direction toward the case (e.g., 220 in FIG. 2), and the plurality of air pockets may be disposed to be spaced apart from one another on the plane of the insulating cover.

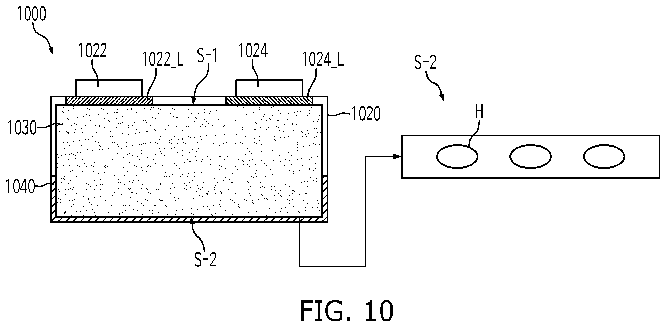

FIG. 10 illustrates an example of a hole of an insulating cover according to embodiments of the present disclosure. FIG. 10 is a cross-sectional view of the secondary battery of FIG. 1 cut along the XZ plane and a view for explaining the hole of the insulating cover.

A secondary battery 1000 further includes an electrolyte 1040 accommodated inside a case 1020. An insulating cover 1030 according to embodiments may further include one or more holes H located in a part covering a side surface S-2 opposite to a side surface S-1 on which an electrode tab is disposed among outer surfaces of an electrode assembly (e.g., the electrode assembly 110 in FIG. 1). For example, a first electrode tab 1022_L connecting the electrode assembly and a first electrode terminal 1022 and a second electrode tab 1024_L connecting the electrode assembly and a second electrode terminal 1024 may be disposed on one side surface. In this case, the side surface S-1 on which the electrode tab is disposed may be one plane. In this case, the side surface S-2 opposite to the side surface S-1 on which the electrode tab is disposed may be an opposite plane parallel to the side surface S-1 on which the electrode tab is disposed.

For example, the hole H may include a plurality of holes disposed to be spaced apart from one another on one surface of the insulating cover 1030. As an example, as shown in FIG. 10, the shape of each of the plurality of holes H is roughly elliptical, and a plurality of holes (for example, 3 holes) may be arranged in a line roughly at the center on one surface of the insulating cover 1030 at constant intervals. In another example, two holes may be formed spaced apart roughly at the center on one surface of the insulating cover 1030. However, in the present disclosure, the number of the plurality of holes and the shape of each are not limited thereto, and other numbers of holes may be formed in other shapes.

The electrolyte 1040 inside the case 1020 can enter between the insulating cover 1030 and the electrode assembly through the hole H of the insulating cover 1030. In embodiments, the electrode assembly can be impregnated with the electrolyte passing through the hole. The electrolyte can pass through the hole H by capillary action to impregnate the electrode assembly.

In embodiments, the electrolyte 1040 injected into the case 1020 through an electrolyte injection port (e.g., the electrolyte injection port 126 in FIG. 1) is filled from the bottom in the case 1020, and can pass through a hole H formed in the lower surface of the insulating cover 1030 to impregnate an electrode assembly adjacent to the inside of the insulating cover 1030.

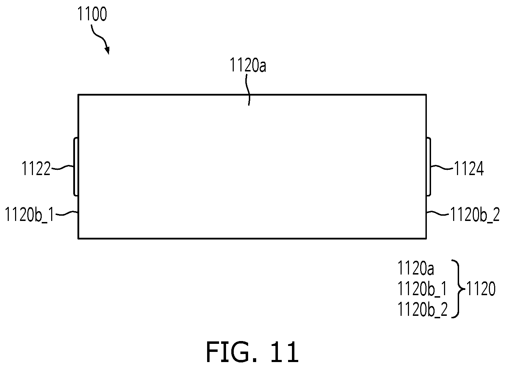

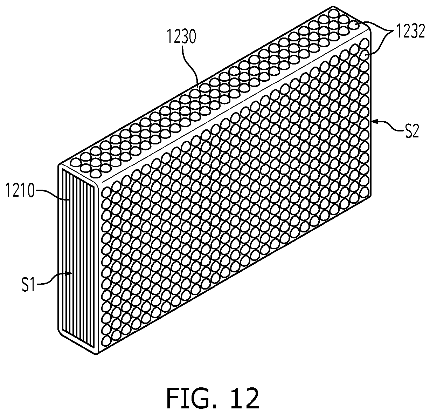

FIG. 11 is a front view illustrating an example of a secondary battery according to embodiments of the present disclosure. FIG. 12 is a perspective view illustrating an example of an insulating cover according to embodiments of the present disclosure. FIG. 11 illustrates a front view of a secondary battery of a different type from that described herein in FIG. 1, and FIG. 12 illustrates an example of an insulating cover that can be used for the secondary battery according to FIG. 11. In FIG. 12, the electrode assembly is illustrated simplified, and parts such as electrode tabs are omitted. Descriptions of technologies overlapping with the herein will be omitted.

A secondary battery 1100 further includes an electrode terminal exposed to the outside of a case 1120, and an electrode assembly may further include an electrode tab extending from a first electrode or a second electrode and connected to the electrode terminal. Referring to FIG. 11 and FIG. 12, an insulating cover 1230 according to embodiments may cover at least a part of the side surfaces of an electrode assembly 1210, excluding the side surface on which the electrode tab is disposed.

Referring to FIG. 11, a secondary battery 1100 according to embodiments may include an electrode assembly including a first electrode, a second electrode, and a separator interposed between the first electrode and the second electrode, a case 1120 accommodating the electrode assembly therein, and an insulating cover.

In embodiments, the case 1120 may include a can 1120a including two openings open on both sides, a first side plate 1120b_1 sealing the opening on one open side, and a second side plate 1120b_2 sealing the opening on the other open side.

The electrode terminal may include a first electrode terminal 1122 electrically connected to the first electrode of the electrode assembly located inside the case 1120 and a second electrode terminal 1124 electrically connected to the second electrode of the electrode assembly. For example, as shown in FIG. 11, the first electrode terminal 1122 may be disposed on the first side plate 1120b_1, and the second electrode terminal 1124 may be disposed on the second side plate 1120b_2. Specifically, the first electrode terminal 1122 can be exposed to the outside while sealing a through-hole formed in the first side plate 1120b_1, and the second electrode terminal 1124 can be exposed to the outside while sealing a through-hole formed in the second side plate 1120b_2.

The electrode tab may include a first electrode tab extending from the first electrode and a second electrode tab extending from the second electrode. The electrode tab may mediate an electrical connection between the electrode and the electrode terminal. The first electrode tab and the second electrode tab may extend from an uncoated portion of the first electrode and an uncoated portion of the second electrode, respectively, or may be coupled to the uncoated portion by welding or the like.

At both side ends of the electrode assembly 1210 according to embodiments, a first electrode tab of the first electrode and a second electrode tab of the second electrode may be located, respectively. In some examples, the electrode assembly 1210 may be accommodated in a case together with an electrolyte. In addition, the electrode assembly 1210 may be located by welding and connecting a first current collector and a second current collector to the first electrode tab of the first electrode and the second electrode tab of the second electrode exposed on both sides, respectively.

An insulating cover 1230 disposed in at least a part of a space formed between the electrode assembly 1210 and the case 1120 may include a plurality of air pockets 1232. The configuration and function of the plurality of air pockets 1232 may be the same as or similar to those described with reference to FIGS. 1 to 9.

Referring to FIG. 12, in embodiments, a first surface S1 on which the first electrode tab is disposed and a second surface S2 on which the second electrode tab is disposed among outer surfaces of the electrode assembly 1210 face one another, and the insulating cover 1230 may cover at least a part (e.g., the entire side surface) of side surfaces excluding the first surface S1 and the second surface S2 among the outer surfaces of the electrode assembly 1210. After inserting the electrode assembly 1210, whose four surfaces excluding the side surfaces on which the electrode tabs are disposed are covered in close contact with the insulating cover 1230 as shown in FIG. 12, into the inside of the case 1120 as shown in FIG. 11, the secondary battery 1100 according to embodiments can be assembled by sealing (e.g., sealing through welding) both side openings of the can 1120a with the first and second side plates 1120b_1 and 1120b_2, respectively.

In the insulating cover 1230 as described herein with reference to FIG. 12, a hole (e.g., H in FIG. 10) for electrolyte impregnation of the electrode assembly as described herein with reference to FIG. 10 may be disposed on the lower surface or the upper surface with respect to FIG. 12.

Although the present disclosure has been described herein with respect to embodiments thereof, the present disclosure is not limited thereto. Various modifications and variations can be made thereto by those skilled in the art within the spirit of the present disclosure and the equivalent scope of the appended claims.

The disclosure additionally includes the following numbered embodiments:
1. A secondary battery, comprising:
   an electrode assembly including a first electrode, a second electrode, and a separator interposed between the first electrode and the second electrode;
   a case accommodating the electrode assembly therein; and
   an insulating cover disposed in at least a part of a space formed between the electrode assembly and the case,
   wherein the insulating cover includes a plurality of sealed air pockets, and
   wherein at least one of the plurality of air pockets contains a fire extinguishing agent.
2. The secondary battery according to embodiment 1, wherein the plurality of air pockets is sealed within a thickness direction of the insulating cover.
3. The secondary battery according to embodiment 2, wherein the plurality of air pockets protrudes in a direction toward the case in the thickness direction of the insulating cover.
4. The secondary battery according to embodiment 1, wherein the plurality of air pockets is exposed on one side surface of the insulating cover and protrudes in a direction toward the case.
5. The secondary battery according to embodiment 1, wherein the plurality of air pockets is disposed to be spaced apart from each other (one another) on a plane of the insulating cover.
6. The secondary battery according to embodiment 1, wherein the plurality of air pockets is adjacent to each other (one another), and wherein the plurality of air pockets does not communicate with each other (one another).
7. The secondary battery according to embodiment 1, wherein a material of the insulating cover is an electrically insulating material.
8. The secondary battery according to embodiment 1, wherein each shape of the plurality of air pockets (a shape of each of the plurality of air pockets) is any one of a spherical shape, a hemispherical shape, a cylindrical shape, a polygonal prism shape, and a tube shape.
9. The secondary battery according to embodiment 1, wherein at least one of the plurality of air pockets is configured to be ruptured at a critical temperature or a critical pressure.
10. The secondary battery according to embodiment 1, wherein the fire extinguishing agent comprises a non-flammable gas.
11. The secondary battery according to embodiment 1, further comprising an electrode terminal exposed to an outside of the case,
   wherein the electrode assembly further comprises an electrode tab extending from the first electrode or the second electrode and connected to the electrode terminal, and
   wherein the insulating cover covers at least a part of side surfaces of the electrode assembly excluding a side surface on which the electrode tab is disposed.
12. The secondary battery according to embodiment 11, wherein the electrode tab comprises a first electrode tab extending from the first electrode and a second electrode tab extending from the second electrode,
   wherein a first surface on which the first electrode tab is disposed and a second surface on which the second electrode tab is disposed among outer surfaces of the electrode assembly face each other (one another), and
   wherein the insulating cover covers at least a part of side surfaces excluding the first surface and the second surface among the outer surfaces of the electrode assembly.
13. The secondary battery according to embodiment 11, wherein the electrode tab comprises a first electrode tab extending from the first electrode and a second electrode tab extending from the second electrode, and wherein the insulating cover covers at least a part of side surfaces of the electrode assembly excluding the side surface on which the electrode tab is disposed.
14. The secondary battery according to embodiment 13, further comprising an electrolyte accommodated inside the case,
   wherein the insulating cover further comprises a hole located in a part covering a side surface (substantially) opposite to the side surface on which the electrode tab is disposed among the outer surfaces of the electrode assembly.
15. The secondary battery according to embodiment 14, wherein the hole comprises a plurality of holes disposed to be spaced apart from each other (one another) on the insulating cover.
16. The secondary battery according to embodiment 1, wherein the electrode assembly has a shape in which the first electrode, the second electrode, and the separator are wound around a winding axis, and
   wherein the insulating cover contacts an outermost region of a curved portion of the wound shape and a flat portion of the wound shape.
17. A secondary battery, comprising:
   an electrode assembly including a first electrode, a second electrode, and a separator interposed between the first electrode and the second electrode;
   a case accommodating the electrode assembly therein; and
   an insulating cover disposed in at least a part of a space formed between the electrode assembly and the case,
   wherein the insulating cover includes a plurality of sealed air pockets,
   wherein at least one of the plurality of air pockets contains a fire extinguishing agent,
   wherein at least one air pocket containing the fire extinguishing agent among the plurality of air pockets is configured to be ruptured at a critical temperature or a critical pressure,
   wherein the plurality of air pockets is sealed within a thickness direction of the insulating cover,
   wherein the plurality of air pockets protrudes in a direction toward the case, and
   wherein the plurality of air pockets is disposed to be spaced apart from each other (one another).
18. The secondary battery according to embodiment 17, wherein the fire extinguishing agent comprises a non-flammable gas.
19. The secondary battery according to embodiment 17, further comprising an electrode terminal exposed to an outside of the case,
   wherein the electrode assembly further comprises an electrode tab extending from the first electrode or the second electrode and connected to the electrode terminal, and
   wherein the insulating cover covers at least a part of side surfaces of the electrode assembly excluding a side surface on which the electrode tab is disposed.
20. The secondary battery according to embodiment 19, further comprising an electrolyte accommodated inside the case,
   wherein the insulating cover further comprises a hole located in a part covering a side surface opposite to the side surface on which the electrode tab is disposed among outer surfaces of the electrode assembly.

## Claims

1. A secondary battery (100), comprising:
an electrode assembly (110) including a first electrode, a second electrode, and a separator interposed between the first electrode and the second electrode;
a case (120) accommodating the electrode assembly (110) therein; and
an insulating cover (130) disposed in at least a part of a space formed between the electrode assembly (110) and the case (120),
wherein:
the insulating cover (130) includes a plurality of sealed air pockets (132), and
at least one of the plurality of air pockets (132) contains a fire extinguishing agent (534).

2. The secondary battery (100) as claimed in claim 1, wherein the plurality of air pockets (532) is sealed within a thickness direction of the insulating cover (530).

3. The secondary battery (100) as claimed in claim 1 or 2, wherein the plurality of air pockets (532) protrudes in a direction toward the case (120) in the thickness direction of the insulating cover (530).

4. The secondary battery (100) as claimed in any one of claims 1 to 3, wherein the plurality of air pockets (632) is exposed on one side surface of the insulating cover (630) and preferably protrudes in a direction toward the case (120).

5. The secondary battery (100) as claimed in any one of claims 1 to 4, wherein the plurality of air pockets (132) is disposed to be spaced apart from one another on a plane of the insulating cover (130).

6. The secondary battery (100) as claimed in any one of claims 1 to 4, wherein the plurality of air pockets (132) is adjacent to one another, and/or wherein the plurality of air pockets (132) does not communicate with one another.

7. The secondary battery (100) as claimed in any one of claims 1 to 6, wherein a shape of each of the plurality of air pockets (132) is any one of a spherical shape (420), a hemispherical shape (410), a cylindrical shape (430), a polygonal prism shape (440), and a tube shape (450).

8. The secondary battery (100) as claimed in any one of claims 1 to 7, wherein at least one of the plurality of air pockets (132) is configured to be ruptured at a critical temperature or a critical pressure.

9. The secondary battery (100) as claimed in any one of claims 1 to 8, wherein the fire extinguishing agent (534) comprises a non-flammable gas.

10. The secondary battery (100) as claimed in any one of claims 1 to 9, further comprising an electrode terminal (122, 124) exposed to an outside of the case (120),
wherein:
the electrode assembly (110) further comprises an electrode tab (1022_L, 1024_L) extending from the first electrode or the second electrode and connected to the electrode terminal (122, 124), and
preferably the insulating cover (130) covers at least a part of side surfaces of the electrode assembly (110) excluding at least one side surface (S-1, S1, S2) on which the electrode tab (1022_L, 1024_L) is disposed.

11. The secondary battery (1100) as claimed in claim 10, wherein:
the electrode tab (1022_L, 1024_L) comprises a first electrode tab (1022_L) extending from the first electrode and a second electrode tab (1024_L) extending from the second electrode,
preferably a first surface (S1) on which the first electrode tab is disposed and a second surface (S2) on which the second electrode tab is disposed among outer surfaces of the electrode assembly (1210) face one another, and
more preferably the insulating cover (1230) covers at least a part of side surfaces excluding the first surface (S1) and the second surface (S2) among the outer surfaces of the electrode assembly (1210).

12. The secondary battery (100) as claimed in claim 10 or 11, wherein:
the electrode tab (1022_L, 1024_L) comprises a first electrode tab (1022_L) extending from the first electrode and a second electrode tab (1024_L) extending from the second electrode, and
preferably the insulating cover (130) covers at least a part of side surfaces of the electrode assembly (110) excluding the side surface (S-1) on which the electrode tab (1022_L, 1024_L) is disposed.

13. The secondary battery (1000) as claimed in any one of claims 10 to 12, further comprising an electrolyte (1040) accommodated inside the case (1020),
preferably wherein the insulating cover (1030) further comprises a hole (H) located in a part covering a side surface (S-2) substantially opposite to the side surface (S-1) on which the electrode tab (1022_L, 1024_L) is disposed among the outer surfaces of the electrode assembly (110).

14. The secondary battery (1000) as claimed in claim 13, wherein the hole (H) comprises a plurality of holes (H) disposed to be spaced apart from one another on the insulating cover (1030).

15. The secondary battery (100) as claimed in any one of claims 1 to 14, wherein:
the electrode assembly (310) has a shape in which the first electrode, the second electrode, and the separator are wound around a winding axis (C), and
preferably the insulating cover (330) contacts an outermost region of a curved portion (P2) of the wound shape and a flat portion (P1) of the wound shape.
